# FASCICULE DE BREVET EUROPEEN

(11) **EP 0 709 402 B1**
(45) Date de publication et mention de la délivrance du brevet: **26.06.2002**
(21) Numéro de dépôt: 95402403.0
(22) Date de dépôt: 26.10.1995
(51) Int. Cl.: C08F 8/30, C08F 257/02, C08F 292/00

(54) **Particule de latex ou d'oxyde minéral glycosylée, procédé de préparation d'une telle particule et utilisation de celle-ci en tant qu'agent de détection biologique ou de chromatographie d'affinité**
Glykosilierte Latex- oder Mineraloxyd-Teilchen, Verfahren zur Herstellung von einem solchen Teilchen und Verwendung dessen als biologisches Nachweismittel oder als Affinitätschromatographie-Mittel
Glycosylated latex or mineral oxide particle, process for the preparation of such a particle and use thereof as a biological detection agent or as an affinity chromatography agent

(30) Priorité: 28.10.1994 FR 9412970
(43) Date de publication de la demande: 01.05.1996
(73) Titulaire: MERCK EUROLAB S.A., 94120 Fontenay-sous-Bois (FR)
(72) Inventeur: Richard, Joel, F-60500 Chantilly (FR); Vaslin, Sophie, F-94360 Bry-sur-marne (FR); Larpent, Chantal, F-78000 Versailles (FR)
(74) Mandataire: Ahner, Francis

(56) Documents cités:
- EP-A- 0 001 223
- EP-A- 0 227 054
- FR-A- 2 677 366
- GB-A- 816 510
- CHEMICAL ABSTRACTS, vol. 119, no. 20, 15 Novembre 1993 Columbus, Ohio, US; abstract no. 204179a, V. KERY 'N-GLYCOSYL DERIVATIVES OF ETHYLENE DIMETHACRYLATE-CROSSLINKED HYDROXYETHYL METHACRYLATE-METHACRYLOYLOXY-ACETOHYDRAZID E COPOLYMER' page 23; & CS-A-271 706 (V. KERY) 9 Septembre 1991
- M.T. Charreyre et al: "Preparation and characterization of polystyrene latexes bearing disaccharide surface groups"; COLLOID & POLYMER SCIENCE, Vol. 271 (1993), pages 668-679.
- M.C. Davies et al: "Preparation of polymer latex particles with immobilized sugar residues and their surface characterization by X-ray Photoelectron Spectroscopy and Time-of-Flight Secondary Ion Mass Spectrometry"; Langmuir, volume 9 (1993), number 7, pages 1637-1645.

## Description

La présente invention concerne une nouvelle particule de latex ou d'oxyde minéral glycosylée, un procédé de préparation d'une telle particule ainsi que l'application de la particule glycosylée comme agent de diagnostic ou de dosage biologique (immunologique ou enzymatique, par exemple) ainsi qu'en biologie moléculaire ou en chromatographie d'affinité.

Les particules ou microsphères de latex sont utilisées depuis longtemps en tant que matériel de diagnostic médical et les microsphères de silice en chromatographie. Par exemple, les particules de latex sont utilisées dans les tests d'agglutination et servent à détecter la présence ou l'absence d'anticorps ou d'antigène. Concrètement, un anticorps ou un antigène est lié à la surface d'une particule de latex qui peut par la suite réagir avec le ou les antigène(s) ou anticorps correspondant(s) contenu(s) dans un fluide corporel par exemple, le sérum du sang, le liquide céphalorachidien (LCR), l'urine, ou une préparation d'extrait tissulaire. Les méthodes de détection sont bien connues de l'homme du métier. Ces particules de polymère peuvent être obtenues de façon classique, par exemple par la polymérisation en émulsion de styrène ou d'autres monomères vinyliques.

On sait néanmoins que lorsqu'elles sont utilisées dans le diagnostic médical, par exemple dans les tests d'agglutination, ces particules présentent un caractère hydrophobe trop marqué pour permettre un couplage avec des anticorps ou des antigènes sans perte d'activité ou de sensibilité. On a donc recherché le moyen de contrôler plus efficacement l'équilibre du caractère hydrophobe et du caractère hydrophile à l'interface entre le polymère et l'eau.

Afin de modifier cet équilibre, on a déjà proposé de coupler la surface de ces particules avec des groupements fonctionnels polaires avec ou sans groupe réactif.

Une technique particulièrement intéressante consisterait à fonctionnaliser ces particules de latex avec des restes de carbohydrate du fait de la biocompatibilité de ces groupements et de leur intérêt dans les mécanismes de reconnaissance biologique faisant intervenir des glycoprotéines ou des glycolipides.

Dans cette optique, M.T. Charreyre et al dans Colloid & Polym. Sci. 271:668-679 (1993) ont proposé de préparer des latex de polystyrène recouverts par des motifs disaccharidiques par un procédé de co(polymérisation) à partir d'une semence en présence d'un oligosaccharide terminé par un groupement hexyl-méthacrylate : le 6-(2-méthylpropenoyloxy)hexyl β-D-cellobioside (CHMA). Ce composé présente cependant l'inconvénient de ne pas être stable chimiquement à pH acide (inférieur à 4), et de se dégrader alors par une réaction d'hydrolyse du groupement saccharide, conduisant à la génération d'un composé glycosidique libre dans le sérum du latex, promoteur de prolifération bactérienne.

Par ailleurs, M.C. Davies et al (Langmuir 1993, 9, 1637-1645) ont proposé également de copolymériser en présence de styrène un acrylamido-thiogalactose qui est le 1-[[2-[[(N-acrylamidométhyl)amino]-carbonyl]éthyl] thio]-β-D-galactopyranoside dont la synthèse est particulièrement délicate (étape de blocage des fonctions -OH du galactose modifié) et la stabilité à pH supérieur à 9 incertaine.

De plus, le document EP-A-0 001 223 décrit des particules de latex directement liées à un alcool polyvalent tel que les polysaccharides solubles dans l'eau, notamment le dextran, l'agarose, les dérivés cellulosiques solubles.

Le document GB-A-816 510 décrit des résines greffées avec une chaîne divalente terminée par un groupe polyol tel que le sorbitol.

Le résumé Chemical Abstract, n° 2104179a décrit un copolymère greffé par une glycosylamine.

Un des objets de la présente invention est de proposer des particules de polymère ou d'oxyde minéral glycosylées qui soient très peu sensibles à l'hydrolyse.

Un autre objet de la présente invention est de proposer des particules de latex ou de silice qui présentent des propriétés interfaciales, plus particulièrement dans leur interaction avec les protéines, qui soient améliorées et/ou modifiées par rapport à celles déjà obtenues dans l'art, notamment selon les deux publications citées en premier ci-dessus.

Un objet de la présente invention est encore de proposer un procédé de préparation de particules de latex ou d'oxyde minéral, notamment de silice, fonctionnalisées avec des restes glycosyle.

L'invention concerne en premier lieu une particule de latex ou d'oxyde minéral glycosylée, caractérisée en ce que au moins une chaîne à l'extrémité de laquelle est attaché un reste glycosyle, est fixée à la surface de ladite particule, en ce qu'elle comporte en surface des radicaux fonctionnels amine, thiol ou phénol ou des sites silanols dans le cas des particules de silice, dont au moins une partie participe à la structure de ladite chaîne, cette dernière répondant à la formule : 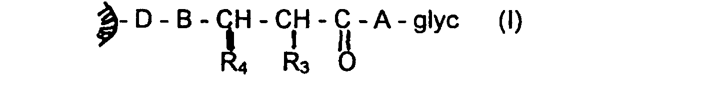
A est la partie restante de ladite chaîne,
B est choisi dans le groupe constitué par les radicaux N-R₁ ou un atome d'oxygène ou un atome de soufre.
D est un radical divalent -(CH₂)n- ou phénylène.
R₁ est un radical alkyle de C₁ à C₄ ou un atome d'hydrogène,
R₃, R₄ identiques ou différents représentent un radical alkyle inférieur en C₁ à C₆ ou un atome d'hydrogène,
n est un nombre entier de 0 à 10,
glyc est un reste glycosyle
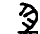 symbolise la surface de la sphère.

Le terme "fixée" signifie que cette particule peut être obtenue soit par greffage sur une microsphère, soit par surpolymérisation à partir d'une semence. De préférence, la particule selon l'invention est obtenue par greffage.

L'ensemble chaîne/reste glycosyle est aussi appelé "chaîne glycosylée".

Les microsphères de latex sont classiquement constituées de polymères obtenus par polymérisation de monomères éthyléniquement insaturés et les particules d'oxyde minéral, notamment de silice, sont obtenues de manière connue. Ces particules sont fonctionnalisées en surface par des fonctions amine, thiol ou phénol ou des silanols dans le cas des particules de silice.

Dans le cas des microsphères de latex, il s'agit d'homopolymères ou de copolymères contenant des motifs dérivés de monomères vinylaromatiques, éthyléniques, éventuellement d'acides ou d'esters alcénoïques ou éthyléniques, une proportion de ces monomères étant fonctionnalisée par des radicaux chlorés. Les radicaux chlorés peuvent être transformés par une transformation subséquente en fonction amine ou en fonction thiol.

Il peut également s'agir d'homopolymères ou copolymères contenant des motifs dérivés de monomères vinylaromatiques hydroxylés (fonction phénol) ou modifiés par des radicaux thiol (fonction phényl thio).

Ce type de polymères est facilement accessible à tout homme de l'art et on se contentera de citer ci-après, à titre non limitatif, quelques monomères dont ils sont issus. Il peut s'agir de :
- monomères éthyléniques de type isoprène, 1,3 butadiène, chlorure de vinylidène, acrylonitrile,
- monomères vinylaromatiques comme le styrène, l'hydroxystyrène, le bromostyrène, l'alphaméthylstyrène, l'éthylstyrène, le vinyltoluène, le chlorostyrène ou le chlorométhylstyrène ou le vinylnaphtalène, l'hydroxy-4-styrène, le thiol-4 styrène.,
- acides, esters ou anhydrides alcénoïques commes les acides acrylique, méthacrylique, acrylates et méthacrylates d'alkyle dont le groupe alkyle possède 1 à 10 atomes de carbone, hydroxyalkylacrylates, les acrylamides, les esters d'acides éthyléniques à 4 ou 5 atomes de carbone ainsi que,
- les monomères difonctionnels tels que le divinylbenzène ou le diacrylate de 2,2-diméthyl-1,3-propylène et/ou d'autres monomères copolymérisables insolubles dans l'eau.

Dans le cas où la particule de latex comporte des radicaux amine, phénol ou thiol en surface, une partie seulement des monomères porte des radicaux amine, ou des radicaux thiol ou phénol dans une proportion de 1 à 25 % en poids par rapport à la totalité des monomères utilisés.

Les monomères sont mis en oeuvre en mélange, ou de façon séquentielle dans des procédés à étapes multiples.

Les particules de polymères peuvent être obtenues par la mise en oeuvre d'une quelconque technique de polymérisation comme la polymérisation en émulsion classique, en microémulsion, en suspension, en microsuspension, ou le cas échéant par polymérisation en milieu organique. Ces techniques familières à l'homme de l'art ne seront pas rappelées ici.

Les particules de silice sont fonctionnalisées de manière connue.

Les particules selon l'invention sont hydrophobes ou hydrophiles (cas de la silice) et possèdent de préférence une taille généralement comprise entre 0,01 et 20 micromètres et de préférence inférieure à 5 micromètres. Elles sont calibrées, monodisperses et présentes dans le latex à raison d'une quantité variant entre 0,05 à 30 % en poids du poids total du latex, préférentiellement entre 0,1 et 10%.

Généralement, la densité surfacique de groupements fonctionnels par mètre carré de microsphère est comprise entre 1 et 50 micro-équivalents, de préférence aux environs de 30 micro-équivalents.

Les particules de latex peuvent être magnétisables et dans ce cas, elles sont associées à des matériaux magnétisables comme ceci est par exemple décrit dans les brevets US 4 339 337, US 4 358 388, US 4 948 739.

Parmi les matériaux pouvant constituer les parties magnétisables des microsphères, on peut citer la magnétite, l'hématite, le dioxyde de chrome, les oxydes mixtes yttrium-fer, les ferrites telles que les ferrites de manganèse, nickel, manganèse-zinc, les alliages de cobalt, nickel, gadolinium, samarium-cobalt. Les matériaux préférentiels sont généralement la magnétite et l'hématite.

La quantité de matériaux magnétisables contenus dans les microsphères correspond à 0,5 à 70 %, de préférence à 15 à 60 % du poids de la microsphère composite magnétisable.

Du fait de la présence de la chaîne qui peut fonctionner comme un "bras espaceur" les contraintes stériques et les possibilités de dénaturation des protéines dues à la proximité de la phase solide que représente la microsphère sont éliminées.

De préférence, la chaîne présente une longueur moyenne allant de 0,5 à 12 nm/5 à 120 Angströms), avantageusement de 0,5 à 5 nm (5 à 50 Angströms) et plus avantageusement aux environ de 1 nm (10 Angströms).

De préférence, les particules comprennent (par unité de surface) de 0,4 à 50 chaînes par nm² auxquelles sont attachés un reste glycosylé.

De préférence, la chaine comporte de 4 à 80 atomes de carbone, avantageusement 6 à 20 atomes.

Il s'agit généralement d'un radical divalent hydrocarboné, éventuellement substitué, comportant éventuellement dans la chaîne principale un ou plusieurs hétéroatomes choisis parmi les atomes d'azote, d'oxygène, de soufre, de phosphore, un ou plusieurs des atomes de carbone pouvant appartenir à des groupes carbonyle ou dérivés (imine ou oxime par exemple) ou comportant un ou plusieurs cycles ou hétérocycles.

Les substituants du radical divalent sont ceux qui ne produisent pas d'empêchement stérique tel que le greffage sur les radicaux fonctionnels de la microsphère deviendrait difficile voire impossible. Il s'agit donc de substituants de faible encombrement tels que les radicaux méthyle, amino ou OH, par exemple.

De même, ces substituants ou les hétéroatomes faisant partie de la chaîne elle-même ne devront pas interférer dans la réaction entre le reste glycosidique de cette chaîne et les radicaux fonctionnels.

De façon générale, le nombre de chaînes glycosylées sur chaque microsphère de latex ou d'oxyde minéral doit être suffisant pour permettre la mise en oeuvre d'un test de diagnostic.

De préférence, la particule selon l'invention est telle que :
lorsque la particule est une particule de silice,
D est (CH₂)n avec n = 0,
B est O.

Lorsque la particule est une particule de latex à radicaux amine,
D est (CH₂)n avec n = 1 à 10,
B est N-R₁.

Lorsque la particule est une particule de latex à radicaux phénol ou thiol,
D est le radical phénylène, B est ⓞ ou S.

De préférence, la particule selon l'invention est telle que ladite chaîne répond à la formule: 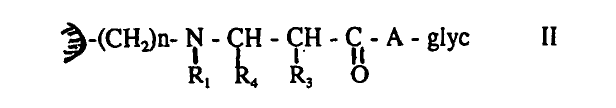 dans laquelle :
R₁, R₃, R₄, A ont la même signification que dans la formule I,
n est un nombre entier de 1 à 10,
glyc est le reste glycosyle
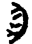 symbolise la surface de la sphère.

De préférence A est le radical 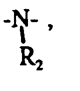 R₂ étant un atome d'hydrogène ou un radical alkyle de C₁-à C₁₄ ou aralkyle de C₇ à C₁₄, lesdits radicaux étant éventuellement substitués par un ou plusieurs radicaux carboxylate ou sulfonate terminaux ou pendants.

Sur un plan pratique, le nombre de chaînes glycosylées est une proportion plus ou moins importante de la quantité de radicaux fonctionnels amine, thiol, phénol, silanol présents sur la microsphère.

Cette proportion varie avantageusement entre 10 et 99 % des radicaux fonctionnels amine, thiol, phénol, silanol présents à la surface de la microsphère, de préférence la proportion est supérieure à 40 % et plus préférentiellement supérieure à 80 %.

Selon un mode de réalisation avantageux de l'invention, la microsphère de latex glycosylée est constituée de polymères obtenus par polymérisation de monomères insaturés éthyléniquement dont 1 à 25 % en poids, présentent des radicaux fonctionnels amine, thiol, phénol en surface, caractérisée en ce qu'une partie des radicaux fonctionnels est reliée à un reste glycosyle et en ce que ladite chaîne répond à la formule : 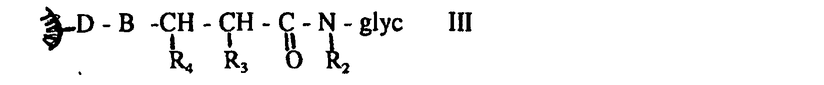 dans laquelle :
D, B, R₁, R₂, R₃, R₄, glyc ont la même signification que précédemment.

Le terme "relié" signifie qu'un reste glycosyle est relié au radical B par l'intermédiaire d'un segment divalent (en l'occurrence 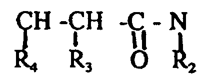 -).

De préférence, D-B est

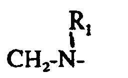

Selon une autre variante préférée, l'invention concerne une particule d'oxyde minéral modifiée en surface par des radicaux fonctionnels amine, thiol ou phénol ou des sites silanols dans le cas des particules de silice caractérisée en ce qu'une partie des radicaux fonctionnels est reliée à un reste glycosyle et en ce que ladite chaîne répond à la formule : 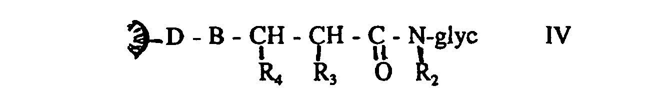 dans laquelle
D, B, R₁, R₂, R₃, R₄, n, glyc, ont la même signification que précédemment.

Les particules d'oxyde minérale selon l'invention sont préférentiellement des particules de silice.

De préférence, la particule de silice est modifiée par des radicaux silanol.

Les radicaux fonctionnels amine présents en surface des particules d'oxyde minérale sont préférentiellement des radicaux -(CH₂)ₙ-NHR avec n compris entre 1 et 10, R étant un radical alkyle inférieur (C₁-C₆).

Parmi les restes glycosyle convenant dans le cadre de la présente invention, on peut citer à titre indicatif les restes des sucres suivants :
. glucose, galactose, galactopyranose, glycofuranose, fructose, fructopyranose, lactose, saccharose.

De préférence le reste glycosyle est le reste du glucose.

Selon un mode de réalisation des microsphères de latex glycosylées où la chaîne glycosylée correspond à la formule III, on surpolymérise un monomère (méth)acrylamidoglycosyle éventuellement N-alkyle et une quantité appropriée d'un monomère insaturé éthyléniquement de type (méth)acrylique sur une semence de polystyrène de préférence dans les conditions suivantes :
- par l'expression "monomère de type (méth)acrylique", on entend les acides, esters ou anhydrides alcénoïques commes les acides acryliques, méthacryliques, acrylates et méthacrylates d'alkyle dont le groupe alkyle possède 3 à 10 atomes de carbone, hydroxyalkylacrylates, les acrylamides, les esters d'acides éthyléniques à 4 ou 5 atomes de carbone.
- le diamètre de la semence est submicronique, généralement entre 0,02 et 0,9 micromètres et la fraction massique de particule dans l'eau ("extrait sec") est comprise entre 0,1 et 20 %.
- la surface des particules de semence est fonctionnalisée par des groupements sulfate qui proviennent essentiellement des émulsifiants sulfatés introduits à la synthèse (de l'ordre de 1,4 % par rapport aux monomères),
- le taux de monomères (méth)acrylamidoglycosyle éventuellement N-alkyle, introduit est compris entre 1 et 25 % en poids par rapport au poids total de semence, de préférence 5 à 15 % en poids. Le taux de monomères de type (méth)acrylique est compris entre 5 et 30 %, avantageusement 15 à 25 %, les pourcentages étant donnés par rapport au poids sec de semence.

De préférence, le monomère de type acrylique ou méthacrylique est un ester de l'acide acrylique ou méthacrylique.

La polymérisation est effectuée de manière connue à une température appropriée de l'ordre de 60 à 70°C en présence de persulfate de potassium comme initiateur par exemple.

On a noté que la surpolymérisation avec une semence de polystyrène, en présence de styrène (en remplacement du méthacrylate de méthyle) ne permettait pas la fixation du monomère N-alkyle acrylamidoglycosyle à la surface des particules.

Un autre mode de réalisation des particules selon l'invention, qu'elle soit modifiée par la chaîne divalente glycosylée de formule I ou une autre chaîne divalente de type II, consiste à greffer sur une particule de latex ou d'oxyde minéral fonctionnalisé en surface par des radicaux amine primaire ou secondaire, un (méth)acrylamidoglycosyle éventuellement N-alkyle par une réaction d'addition nucléophile de type Michael.

En général, les radicaux fonctionnels amine primaire ou secondaire sont reliés à la particule de latex ou de silice par une chaîne alkylène courte (C₁-C₅) de préférence méthylène pour le latex et butylène pour la silice.

Le taux de greffage est évalué par spectrophotométrie UV sur le surnageant, par chromatographie sur couche mince du mélange polymère/monomère extrait ou par le test spécifique au mélange "phénol-acide sulfurique" décrit par Lee dans Anal. Biochem. 95, 260 (1979)

La réaction du monomère sur les radicaux amine est effectuée à pH basique, entre 8 et 12 et préférentiellement aux environs de 9.

En général, la quantité de radicaux fonctionnels amine doit être suffisante pour permettre d'obtenir un greffage conduisant à des particules utiles dans le domaine biologique, diagnostique ou chromatographie d'affinité.

De façon non limitative dans le cas des latex, on peut indiquer que la quantité de radicaux fonctionnels amine est comprise entre 50 et 500 microéquivalents par gramme de polymère. Cette réaction s'est révélée particulièrement appropriée dans tous les cas, mais avantageusement dans le cas où la chaîne divalente glycosylée correspond à celle de formule III.

La réaction est conduite à température ambiante ou à 60°C sous agitation en atmosphère inerte, par exemple l'azote. Elle peut être suivie par spectrophotométrie UV sur la phase aqueuse et par chromatographie sur couche mince (CCM) sur le N-alkylacrylamidoglycosyle et le polymère extrait.

On a trouvé que les propriétés interfaciales des particules, et plus particulièrement leur interaction avec les protéines, dépendaient du taux et du mode d'introduction des restes glycosyle à leur surface (surpolymérisation du monomère acrylamidoglycosyle éventuellement N-alkyle en présence de méthacrylate de méthyle ou équivalent ou réaction de surface sur radicaux fonctionnels amine). La conformation des chaînes de surface et la disposition des restes glycosyle n'est pas identique pour les deux procédés de fonctionnalisation et conduit donc à des microsphères de structure tridimensionnelle différente.

De préférence, le (méth)acrylamidoglycosyle éventuellement N-alkyle répond à la formule V : 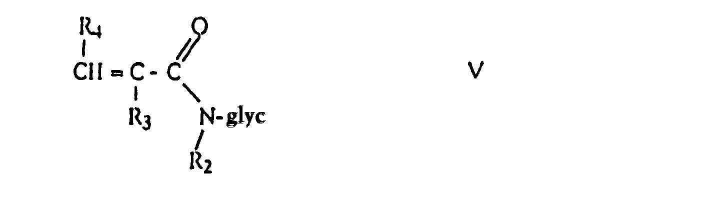 dans laquelle R₃, R₄ identiques ou différents sont un radical alkyle en C₁-C₆ ou un atome d'hydrogène,
R₂ est un radical alkyle en C₁-C₁₄ ou aralkyle en C₇-C₁₄ éventuellement substitué ou un atome d'hydrogène,
glyc est un radical sucre.

La préparation de ces composés est effectuée de manière simple, ne nécessitant pas d'étape de blocage des fonctions hydroxyles.

La synthèse est réalisée en deux étapes à partir du composé glycosylé par action de l'alkylamine puis acryloylation de l'alkylglycosylamine en milieu aqueux par exemple selon l'équation ci-dessous :

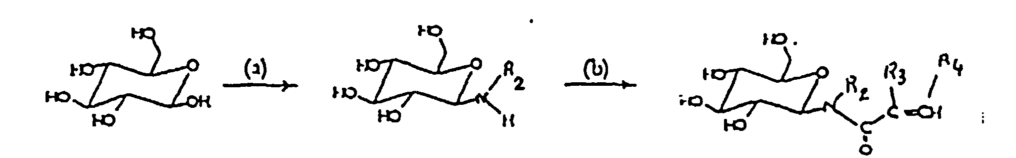

Cette méthode permet d'isoler le monomère avec un rendement supérieur ou égal à 75 % environ. Le produit brut ainsi obtenu a environ une pureté de 90 %. Les impuretés présentes sont des composés di-acryloylés en position variable sur le site glycosidique ce qui ne constitue pas un facteur limitant pour l'utilisation du monomère en copolymérisation ou pour la mise en oeuvre de réaction de surface. Le composé peut être purifié par chromatographie sur colonne de gel de silice.

La préparation des microsphères de latex fonctionnalisées en surface comportant des radicaux fonctionnels amine, thiol, phénol peut être effectuée en utilisant le procédé suivant :
- copolymérisation styrène-chlorométhylstyrène (VBC) en émulsion ou en microémulsion,
- réaction d'une alkylamine ou aralkylamine en excès sur les groupements chlorométhyles de surface en milieu tamponné basique (pH = 8,5) puis élimination de l'excès d'aminé par dialyse.

Selon le schéma suivant :

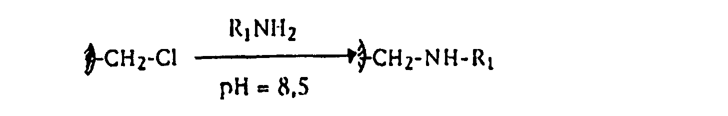

Le rendement d'une telle réaction est en général supérieur à 50 %. Le greffage de l'acrylamidoglycosyle éventuellement N-alkyl sur ces microsphères aminées est effectué en additionnant ce composé progressivement à la suspension de microsphère à un pH tamponné légèrement basique entre 8 et 13. Le réactif est selon une variante introduit en défaut, l'avancement de la réaction étant simplement déterminé par la disparition du réactif en solution : dosage par chromatographie couche mince (CCM) et chromatographie liquide haute performance etc. La réaction peut être schématisée de la façon suivante :

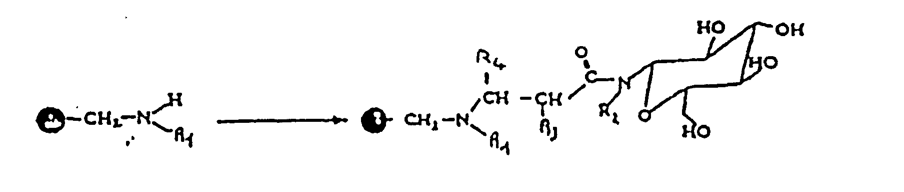

La préparation des particules de silice fonctionnalisées en surface comportant des radicaux fonctionnels aminé peut être effectuée en utilisant le procédé suivant :
- réaction d'un aminoalcool ou aminoaralcool en excès sur les groupements silanol de surface en milieu solvant hydroalcoolique.

De préférence, l'aminoalcool est un 4-amino 1-butanol.

Le rendement d'une telle réaction est en général supérieur à 50 %. Le greffage de l'acrylamidoglycosyle éventuellement N-alkyl sur ces microsphères aminées est effectué en additionnant ce composé progressivement à la suspension aqueuse de microsphères à un pH tamponné légèrement basique entre 8 et 13. Le réactif est selon une variante introduit en défaut, l'avancement de la réaction étant simplement déterminé par la disparition du réactif en solution : dosage par chromatographie couche mince (CCM) et chromatographie liquide haute performance etc. La réaction peut être schématisée de la façon suivante :

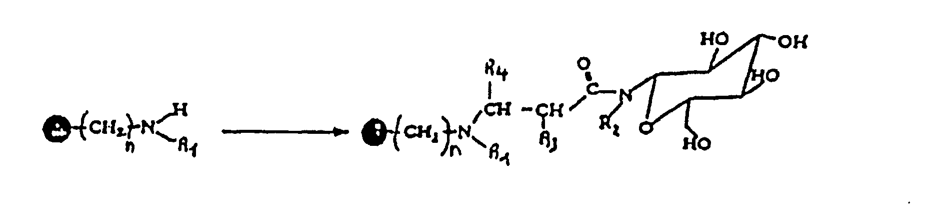

La préparation des microsphères de silice fonctionnalisées en surface par des fonctions silanols peut être effectuée par greffage sur les fonctions -OH de surface par addition Michael de manière connue.

L'invention a enfin pour objet l'utilisation des particules glycosylées précédemment décrites comme agent de diagnostic ou de détection biologique, ou comme phase stationnaire de chromatographie par affinité.

Ces particules peuvent être utilisées dans des domaines biologiques très variés. Ainsi, dans le diagnostique biomédical et plus particulièrement les tests de type EIA ou ELISA, les groupements glycosylés apportent une biocompatibilité avec les anticorps immobilisés à la surface des particules, pour lesquels le fragment Fc contient des résidus carbohydrates.

Les exemples ci-après illustrent la présente invention.

### Exemple 1

### Préparation du N-(β-D-glucopyranosyl)-N-octyl-acrylamide

### a) Synthèse de la N-octyl-β-D-glucopyranosylamine

A une solution de 40 g d'octylamine (0,3 mol) dans 50 ml de méthanol absolu, on ajoute 54 g de glucose (0,3 mol). Le mélange réactionnel est chauffé à 65°C pendant 20 min puis additionné de 50 ml d'éthanol à 95% chaud. La N-octyl-β-D-glucopyranosylamine qui précipite au refroidissement (précipitation totale après 2 heures) est filtrée sur buchner puis recristallisée dans l'éthanol absolu (1,5 l).
Masse obtenue : 77,7 g Rendement : 89 %
Point de fusion (°C) = 103-107.

### b) Synthèse du N-(β-D-glucopyranosyl)-N-octyl-acrylamide (AC8) dans un mélange eau/THF

A 25 g de N-octyl-β-D-glucopyranosylamine en solution dans 400 ml d'eau et 400 ml de THF, on ajoute 33,6 g de carbonate de sodium en solution dans le minimum d'eau. Au mélange réactionnel refroidi à 0°C, on ajoute 36 ml de chlorure d'acryloyle en 2 fois à 2 heures d'écart. Le mélange réactionnel est ensuite porté à 30°C pendant 4 heures. Après évaporation du THF sous pression réduite, la phase aqueuse est extraite par 3 x 300 ml d'acétate d'éthyle. Les phases organiques rassemblées sont ensuite lavées par 2 x 100 ml d'une solution aqueuse de bicarbonate de sodium puis à l'eau. Après séchage sur sulfate de magnésium et évaporation de l'acétate d'éthyle, on isole 25,2 g de composé brut.
Rendement : 85 %
I.R. (nujol, n cm⁻¹) : 3500-3200(H-O); 1650 (amide I) ; 1610 (C=C).

### Exemple 2

### Synthèse du N-(β-D-glucopyranosyl)-N-octyl-acrylamide : "acrylamidosucre" AC8

### a) Synthèse de la N-octyl-β-D-glucopyranosylamine

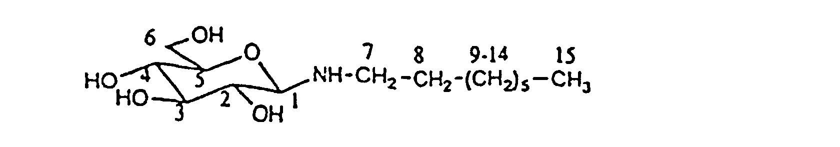

A une solution de 60 mmoles (7,7 g) d'octylamine dans 10 ml de méthanol, on ajoute 60 mmoles (10,8 g) de glucose. Le milieu réactionnel est chauffé à 60-65°C durant 15 min. La N-octyl-β-D-glucopyranosylamine brute précipite après addition de 10 ml d'éthanol à 95 %. Elle est filtrée et recristallisée 3 fois dans l'éthanol absolu.
Masse obtenue : 12,8 g Rendement : 75 %
Point de fusion (°C) = 104-106.

### b) Synthèse du N-(β-D-glucopyranosyl)-N-octyl-acrylamide: "acrylamido-sucre" AC8 dans le méthanol

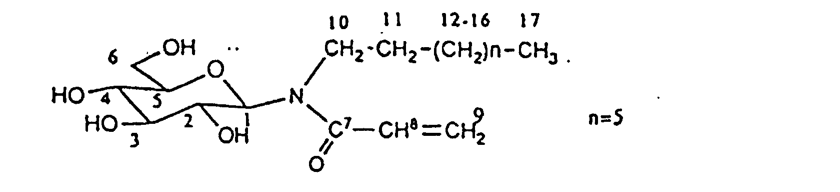

A 24 mmoles (7 g) de N-octyl-β-D-glucopyranosylamine dans 100 ml de méthanol à 30°C, on ajoute 62,5 mmoles (6,63 g) de carbonate de sodium, 48 mmoles (3,9 ml) de chlorure d'acryloyle sont coulés à 0°C en 5 minutes sur le milieu hétérogène. Le milieu réactionnel est laissé sous agitation et température ambiante pendant 25 minutes. Après addition de 100 ml d'eau et évaporation du méthanol, l'acrylamido-sucre est extrait par 300 ml d'acétate d'éthyle. La phase organique est lavée par une solution saturée de NaHCO₃, séchée sur MgSO₄ et évaporée sous pression réduite.
Masse obtenue : 8,0 g Rendement : 95 %
solide amorphe

### Exemple 3

### Synthèse de la N-(β-D-glucopyranosyl)-N-tétradécyl-acrylamide : "acrylamidosucre" AC14

### a) Synthèse de la N-tétradécyl β-D-glucopyranosylamine

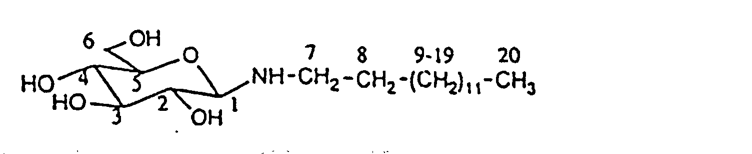

Le mélange d'une solution de 50 mmoles de tétradécylamine (10,65 g) dans 25 ml d'éthanol et d'une solution de 25 mmoles (4,5 g) de glucose dans 17,5 ml d'eau est laissé à température ambiante pendant 2 jours. Le produit qui cristallise est filtré et recristallisé trois fois dans l'éthanol absolu.
Masse obtenue : 5,25 g Rendement : 56 %
Point de fusion (°C) = 109°C

### b) Synthèse du N-(β-D-glucopyranosyl)-N-tétradécyl-acrylamide: "acrylamidosucre" dans le THF

A une solution de 13,7 mmoles (4 g) de N-Tétradécyl β-D-glucopyranosylamine dans 190 ml de THF, on additionne une solution de 85 mmoles (9 g) de carbonate de sodium 25 ml d'eau. Une solution de 26 mmoles (2,0 ml) de chlorure d'acryloyle dans 20 ml de THF est additionnée goutte à goutte pendant une heure. Le THF est évaporé puis l'acrylamido-sucre est extrait avec 300 ml d'acétate d'éthyle. La phase organique est lavée avec une solution saturée de NAHCO₃ séchée sur MgSO₄ et évaporée sous pression réduite.
Masse obtenue : 3,99 g Rendement : 89 %
Solide amorphe
l'oint de fusion ("C) (décomposition) = 110°C.

### Exemple 4

### Préparation de nanoparticules aminées

- Composition de la micro-émulsion initiale : eau (75 %), SDS (8,3 %), 1-pentanol (9,2 %), styrène (6 %), VBC (1,5 %).
- Polymérisation : initiatcur persulfate d'ammoniumtétraméthyldiaminométhane, 25°C, 2 heures. L'étude par PCS de la suspension donne une taille des particules de 25 +/- 3 nm (très peu polydisperse). L'analyse élémentaire du polymère floculé est en accord avec une composition 80 % styrène-20% VBC : %C 85,24 (trouvé) ; 87,99 (cale)-% H 7,51 (trouvé) ; 7,38 (calc)-%Cl 4,34 (trouvé) ; 4,65 (calc).
- Substitution de surface : à 50 g de suspension de nanoparticules de copolymère styrène-VBC diluée dans 280 ml de tampon HEPES (pH=8,5), on ajoute 1 ml d'éthylamine (4,67 eq. par rapport au VBC initialement introduit). La suspension est agitée pendant 48 heures avant d'être dialysée pendant 1 heure afin d'éliminer l'éthylamine en excès (contrôle du pH ; durée de la dialyse environ 1 h). L'analyse élémentaire N/Cl du polymère floculé permet d'évaluer le taux de substitution à environ 50 %.

### Exemple 5

### Greffage de groupement glucosidique sur les nanoparticules en suspension aqueuse

On additionne le N-(β-D-glucopyranosyl)-N-octyl-acrylamide (AC8) progressivement à la suspension de nanoparticules à pH tamponné à 8,5. L'avancement de la réaction est simplement déterminé par la disparition du réactif en solution : CCM, HPLC. Le taux de greffage exprimé par rapport aux groupements aminométhyles présents est de 76 %.

### FONCTIONNALISATION

### 1 - Fonctionnalisation de particules de latex Estapor® comportant des fonctions NH₂ de surface

### Exemple 6 (CE3a)

### Excès de monomère dérivé de sucre AC8 à température ambiante

A 10 ml de latex Estapor® K3-080, on ajoute 50 mg d'azoture de sodium NaN₃ (bactéricide), 50 mg de nitrite de sodium NaNO₂ (inhibiteur de polymérisation), 100 µl de soude 10N (concentration en soude dans le milieu réactionnel : 0,1N) puis 350 mg d'acrylamidosucre AC8 (10⁻³ mole, 5.5 eq/NH₂). Le mélange réactionnel est laissé sous agitation douce (agitation magnétique) à l'abri de la lumière pendant 68 h. La suspension stable obtenue est dialysée pour éliminer l'excès d'acrylamidosucre AC8.

Le taux de fonctionnalisation est déterminé après floculation du polymère.

### Floculation :

A 5 ml de suspension on ajoute 10 ml d'une solution saturée en sel (Nacl) et 10 ml d'une solution saturée en sulfate de magnésium (MgSO₄). Le mélange est chauffé à 80°C pendant 1h pour parfaire la floculation. Le polymère floculé est récupéré par filtration de la solution chaude puis lavé abondamment à l'eau chaude pour éliminer l'excès de sels. Le polymère ainsi isolé est séché à l'étuve à 60°C jusqu'à poids constant.

### Mise en évidence du greffage de sucre dans le polymère floculé :

La présence de sucre greffé dans le polymère est mise en évidence par le test spécifique "phénol-acide sulfurique".

L'étude par chromatographie couche mince (éluant dichlorométhane/méthanol 80/20) du polymère met en évidence l'absence de monomère acrylamidosucre AC8 libre (Rf = 0,4) et la présence de sucre lié au polymère (Rf = 0).
Analyse élémentaire : 68,33 % C; 6,64 % H ; 0,85 % N

### Exemple 7 (CE3f)

### Excès de monomère AC8 à chaud

A 10 ml de latex Estapor® K3-080, on ajoute 50 mg d'azoture de sodium NaN₃ (bactéricide), 50 mg de nitrite de sodium NaNO₂ (inhibiteur de polymérisation), 100 µl de soude 10N (concentration en soude dans le milieu réactionnel : 0,1N) puis 350 mg d'acrylamidosucre AC8 (10⁻³ mole, 5.5 eq/NH₂). Le mélange réactionnel est chauffé à 50°C sous agitation douce (agitation magnétique) à l'abri de la lumière pendant 3,30 h. La suspension stable obtenue est dialysée pour éliminer l'excès d'acrylamidosucre AC8.

Le taux de fonctionnalisation est déterminé après floculation du polymère.

### Floculation :

A 5 ml de suspension on ajoute 10 ml d'une solution saturée en sel (NaCl) et 10 ml d'une solution saturée en sulfate de magnésium (MgSO₄). Le mélange est chauffé à 80°C pendant 1h pour parfaire la floculation. Le polymère floculé est récupéré par filtration de la solution chaude puis lavé abondamment à l'eau chaude pour éliminer l'excès de sels. Le polymère ainsi isolé est séché à l'étuve à 60°C jusqu'à poids constant.

### Mise en évidence du greffage de sucre dans le polymère floculé :

La présence de sucre greffé dans le polymère est mise en évidence par le test spécifique "phénol-acide sulfurique".

L'étude par chromatographie couche mince (éluant dichlorométhane/méthanol 80/20) du polymère met en évidence l'absence de monomère acrylamidosucre AC8 libre (Rf = 0,4) et la présence de sucre lié au polymère (Rf = 0).
Analyse élémentaire : 69,15 % C ; 7,64 % H ; 1,4 % N.

### Exemple 8 (CE6a)

### Quantité stoechiométrique de monomère AC8 à température ambiante

A 10 ml de latex Estapor® K3-080, on ajoute 50 mg d'azoture de sodium NaN₃ (bactéricide), 50 mg de nitrite de sodium NaNO₂ (inhibiteur de polymérisation), 100 µl de soude 10N (concentration en soude dans le milieu réactionnel : 0,1N) puis 52 mg d'acrylamidosucre AC8 (1.5 10⁻⁴ mole, 1 eq/NH₂). Le mélange réactionnel est laissé sous agitation douce (agitation magnétique) à l'abri de la lumière pendant 54 h. Le suivi de la réaction par chromatographie couche mince (éluant dichlorométhane/méthanol 80/20) met en évidence la disparition totale de l'acrylamidosucre AC8 (Rf = 0.4).

Le taux de fonctionnalisation est déterminé après floculation du polymère.

### Floculation :

A 5 ml de suspension on ajoute 10 ml d'une solution saturée en sel (Nacl) et 10 ml d'une solution saturée en sulfate de magnésium (MgSO₄). Le mélange est chauffé à 80°C pendant 1h pour parfaire la floculation. Le polymère floculé est récupéré par filtration de la solution chaude puis lavé abondamment à l'eau chaude pour éliminer l'excès de sels. Le polymère ainsi isolé est séché à l'étuve à 60°C jusqu'à poids constant.

### Mise en évidence de la présence de sucre greffé dans le polymère floculé :

La présence de sucre greffé dans le polymère est mise en évidence par le test spécifique "phénol-acide sulfurique".

L'étude par chromatographie couche mince (éluant dichlorométhane/méthanol 80/20) du polymère met en évidence l'absence de monomère acrylamidosucre AC8 libre (Rf = 0,4) et la présence de sucre lié au polymère (Rf = 0).
Analyse élémentaire : 89,28 % C ; 7,56 % H ; 0,35 % N.

### Exemple 9 (CE6j)

### Quantité stoechiométrique de monomère AC8 à chaud

A 30 g de latex Estapor® K3-080, on ajoute 150 mg d'azoture de sodium NaN₃ (bactéricide), 150 mg de nitrite de sodium NaNO₂ (inhibiteur de polymérisation), 300 µl de soude 10N (concentration en soude dans le milieu réactionnel : 0,1N) puis 156 mg d'acrylamidosucre AC8 (4.5 10⁻⁴ mole, 1 eq/NH₂). Le mélange réactionnel est chauffé à 58°C sous agitation douce (agitation magnétique) à l'abri de la lumière pendant 3 h. Le suivi de la réaction par chromatographie couche mince (éluant dichlorométhane/méthanol 80/20) met en évidence la disparition totale de l'acrylamidosucre AC8 (Rf = 0.4).

Le taux de fonctionnalisation est déterminé après floculation du polymère.

### Floculation :

A 5 ml de suspension on ajoute 10 ml d'une solution saturée en sel (NaCl) et 10 ml d'une solution saturée en sulfate de magnésium (MgSO₄). Le mélange est chauffé à 80°C pendant 1h pour parfaire la floculation. Le polymère floculé est récupéré par filtration de la solution chaude puis lavé abondamment à l'eau chaude pour éliminer l'excès de sels. Le polymère ainsi isolé est séché à l'étuve à 60°C jusqu'à poids constant.

### Mise en évidence de la présence de sucre greffé dans le polymère flocule :

La présence de sucre greffé dans le polymère est mise en évidence par le test spécifique "phénol-acide sulfurique".

L'étude par chromatographie couche mince (éluant dichlorométhane/méthanol 80/20) du polymère met en évidence l'absence de monomère acrylamidosucre AC8 libre (Rf = 0,4) et la présence de sucre lié au polymère (Rf = 0).
Analyse élémentaire : 81,26 % C ; 7,25 % H ; 0,36 % N.

### Exemple 10 (CE61)

### Quantité stoechiométrique de monomère dérivé de sucre AC14 à chaud

A 30 g de latex Estapor® K3-080, on ajoute 150 mg d'azoture de sodium NaN₃ (bactéricide), 150 mg de nitrite de sodium NaNO₂ (inhibiteur de polymérisation), 300 µl de soude 10N (concentration en soude dans le milieu réactionnel : 0,1N) puis 193 mg d'acrylamidosucre AC14 (4.5 10⁻⁴ mole, 1 eq/NH₂). Le mélange réactionnel est chauffé à 58°C sous agitation douce (agitation magnétique) à l'abri de la lumière pendant 5 h. Le suivi de la réaction par chromatographie couche mince (éluant dichlorométhane/méthanol 80/20) met en évidence la disparition totale de l'acrylamidosucre AC14 (Rf = 0.4).

Le taux de fonctionnalisation est déterminé après floculation du polymère.

### Floculation :

A 5 ml de suspension on ajoute 10 ml d'une solution saturée en sel (NaCl) et 10 ml d'une solution saturée en sulfate de magnésium (MgSO₄). Le mélange est chauffé à 80°C pendant 1h pour parfaire la floculation. Le polymère floculé est récupéré par filtration de la solution chaude puis lavé abondamment à l'eau chaude pour éliminer l'excès de sels. Le polymère ainsi isolé est séché à l'étuve à 60°C jusqu'à poids constant.

### Mise en évidence de la présence de sucre greffé dans le polymère floculé :

La présence de sucre greffé dans le polymère est mise en évidence par le test spécifique "phénol-acide sulfurique".

L'étude par chromatographie couche mince (éluant dichlorométhane/méthanol 80/20) du polymère met en évidence l'absence de monomère acrylamidosucre AC14 libre (Rf = 0,4) et la présence de sucre lié au polymère (Rf= 0).
Analyse élémentaire : 80,13 % C ; 7,26 % H ; 0,61 % N.

### Exemple 11 (CE6m)

### Quantité stoechiométrique de monomère AC8 à chaud sans base ajoutée

A 30 g de latex Estapor® K3-080, on ajoute 150 mg d'azoture de sodium NaN₃ (bactéricide), 150 mg de nitrite de sodium NaNO₂ (inhibiteur de polymérisation), puis 156 mg d'acrylamidosucre AC8 (4.5 10⁻⁴ mole, 1 eq/NH₂). Le mélange réactionnel est chauffé à 58°C sous agitation douce (agitation magnétique) à l'abri de la lumière pendant 5 h. Le suivi de la réaction par chromatographie couche mince (éluant dichlorométhane/méthanol 80/20) met en évidence la disparition totale de l'acrylamidosucre AC8 (Rf = 0.4).

Le taux de fonctionnalisation est déterminé après floculation du polymère.

### Floculation :

A 5 ml de suspension on ajoute 10 ml d'une solution saturée en sel (Nacl) et 10 ml d'une solution saturée en sulfate de magnésium (MgSO₄). Le mélange est chauffé à 80°C pendant 1h pour parfaire la floculation. Le polymère floculé est récupéré par filtration de la solution chaude puis lavé abondamment à l'eau chaude pour éliminer l'excès de sels. Le polymère ainsi isolé est séché à l'étuve à 60°C jusqu'à poids constant.

### Mise en évidence de la présence de sucre greffé dans le polymère floculé :

La présence de sucre greffé dans le polymère est mise en évidence par le test spécifique "phénol-acide sulfurique".

L'étude par chromatographie couche mince (éluant dichlorométhane/méthanol 80/20) du polymère met en évidence l'absence de monomère acrylamidosucre AC8 libre (Rf = 0,4) et la présence de sucre lié au polymère (Rf = 0).
Analyse élémentaire : 90 % C ; 7,56 % H ; 0,5 % N.

### 2 - Fonctionnalisation en particules de silice modifiée -(CH₂)₄-NH₂

Analyse centésimale de la silice de départ : % C = 3,02 ; % N = 1,03 ; %Si = 41,75 %.

### Exemple 12 (CLP23)

### Addition du monomère AC8(640 mR/300 mg) à chaud

A 300 mg de la silice modifiée NH₂ (0,221 meq NH₂), on ajoute 10 ml d'une solution aqueuse de soude 1N, 50 mg d'azoture de sodium NaN₃ (bactéricide), 50 mg de nitrite de sodium NaNO₂ (inhibiteur de polymérisation), puis 640 mg d'acrylamidosucre AC8 (1.85 10⁻³ mole). Le mélange réactionnel est chauffé à 58°C sous agitation douce (agitation magnétique) à l'abri de la lumière pendant 4 h.

Le taux de fonctionnalisation est déterminé après séparation de la silice.

### Séparation de la silice modifiée :

Le mélange réactionnel est neutralisé par addition d'acide chlorhydrique 1N puis centrifugé. La silice ainsi isolée est lavée abondamment à l'eau chaude pour éliminer l'excès de sels. La silice modifiée ainsi isolée est séchée à l'étuve à 60°C jusqu'à poids constant.

### Mise en évidence de la présence de sucre greffé :

La présence de sucre greffé sur la silice est mise en évidence par le test spécifique "phénol-acide sulfurique".

L'étude par chromatographie couche mince (éluant dichlorométhane/méthanol 80/20) de la silice isolée met en évidence l'absence de monomère acrylamidosucre AC8 libre (Rf = 0,4) et la présence de sucre lié au polymère (Rf = 0).
Le spectre IR met en évidence, la présence de sucre.
IR, pastillage KBr, v cm⁻¹ 1640 ( C = 0, amide primaire) ; 1200 à 1100 (SiO).
Analyse élémentaire : 32,93 % C ; 20,19 % Si ; 5,67 % H ; 2,74 % N.

### Exemple 13 (CLP25)

### Addition du monomère AC8 (710 mg/100 mg) à chaud

A 100 mg de la silice modifiée NH₂ (0,074 meq NH₂), on ajoute 10 ml d'une solution aqueuse de soude 1N, 50 mg d'azoture de sodium NaN₃ (bactéricide), 50 mg de nitrite de sodium NaNO₂ (inhibiteur de polymérisation), puis 710 mg d'acrylamidosucre AC8 (2 10⁻³ mole). Le mélange réactionnel est chauffé à 58°C sous agitation douce (agitation magnétique) à l'abri de la lumière pendant 20 h. Le suivi de la réaction par chromatographie couche mince (éluant dichlorométhane/méthanol 80/20) met en évidence la disparition totale de l'acrylamidosucre AC8 (Rf = 0.4).

Le taux de fonctionnalisation est déterminé après séparation de la silice.

### Séparation de la silice modifiée :

Le mélange réactionnel est neutralisé par addition d'acide chlorhydrique 1N puis centrifugé. La silice ainsi isolée est lavée abondamment à l'eau chaude pour éliminer l'excès de sels. La silice modifiée ainsi isolée est séchée à l'étuve à 60°C jusqu'à poids constant.

### Mise en évidence de la présence de sucre greffé :

La présence de sucre greffé sur la silice est mise en évidence par le test spécifique "phénol-acide sulfurique".

L'étude par chromatographie couche mince (éluant dichlorométhane/méthanol 80/20) de la silice isolée met en évidence l'absence de monomère acrylamidosucre AC8 libre (Rf = 0,4) et la présence de sucre lié au polymère (Rf = 0).
Le spectre IR met en évidence, la présence de sucre.
IR, pastillage KBr, ν cm⁻¹ 1640 (C = 0, amide primaire) ; 1200 à 1100 (SiO).
Analyse élémentaire : 35,92 % C ; 18,23 % Si ; 6,11 % H ; 2,95 % N.

### Exemple 14 (CLP26)

### Addition du monomère AC8 (710 mg/330 mg) à chaud

A 330 mg de la silice modifiée NH₂ (0,263 meq NH₂), on ajoute 10 ml d'une solution aqueuse de soude 1N, 50 mg d'azoture de sodium NaN₃ (bactéricide), 50 mg de nitrite de sodium NaNO₂ (inhibiteur de polymérisation), puis 710 mg d'acrylamidosucre AC8 (2 10⁻³ mole). Le mélange réactionnel est chauffé à 58°C sous agitation douce (agitation magnétique) à l'abri de la lumière pendant 24 h. Le suivi de la réaction par chromatographie couche mince (éluant dichlorométhane/méthanol 80/20) met en évidence la disparition totale de l'acrylamidosucre AC8 (Rf = 0.4).

Le taux de fonctionnalisation est déterminé après séparation de la silice.

### Séparation de la silice modifiée :

Le mélange réactionnel est neutralisé par addition d'acide chlorhydrique 1N puis centrifugé. La silice ainsi isolée est lavée abondamment à l'eau chaude pour éliminer l'excès de sels. La silice modifiée ainsi isolée est séchée à l'étuve à 60°C jusqu'à poids constant.

### Mise en évidence de la présence de sucre greffé :

La présence de sucre greffé sur la silice est mise en évidence par le test spécifique "phénol-acide sulfurique".

L'étude par chromatographie couche mince (éluant dichlorométhane/méthanol 80/20) de la silice isolée met en évidence l'absence de monomère acrylamidosucre AC8 libre (Rf = 0,4) et la présence de sucre lié à la silice (Rf = 0).
Le spectre IR met en évidence, la présence de sucre.
IR, pastillage KBr, ν cm⁻¹ 1640 ( C = 0, amide primaire) ; 1200 à 1100 (SiO).
Analyse élémentaire : 22,5 % C ; 18,63 % Si ; 3,82 % H ; 4,11 % N.

### ETUDE DE LA STABILITE DES LATEX MODIFIES

### 1 - à différents pH

Les tests de stabilité ont été effectués sur une prise d'essai de 2 ml de suspension (CE6j, CE3f et CE6l). Les mesures de pH ont été effectuées au moyen d'un pHmètre muni d'une électrode de verre. Le pH des suspensions a été ajusté par addition d'une solution aqueuse d'acide chlorhydrique 0.1N.

Les suspensions sont stables (examen visuel sur un intervalle de temps de 3 jours) dans une gamme de pH variant de 12 à 2. A pH 1, on observe une déstabilisation après 10 heures.

Pour comparaison, on observe une déstabilisation immédiate de la suspension de latex de départ Estapor® K3-080 dès pH = 3.

### 2 - en présence d'électrolytes

Les tests de stabilité ont été effectués sur une prise d'essai de 2 ml de suspension.

La stabilité des suspensions en présence de différents sels en concentration variable a été évaluée par examen visuel sur un intervalle de temps de 3 jours.

Essais réalisés sur les suspensions CE6j, CE3f et CE6l.

### * Chlorure de sodium NaCl

Les suspensions sont stables en solution saturée en NaCl (20 ml de solution aqueuse saturée en NaCl/2 ml de suspension). Pour comparaison, on observe une déstabilisation de la suspension de latex de départ Estapor® K3-080 dans les mêmes conditions.

### * Chlorure de calcium CaCl₂

Les suspensions CE6j et CE6l obtenues en milieu NaOH 0,1N (pH de la suspension # 11) sont stables en présence de CaCl₂ jusqu'à une concentration de 1 mol.1⁻¹,

La suspension CE3f est stable en présence de CaCl₂ jusqu'à une concentration de 5.10⁻² mol.1⁻¹. La même suspension ramenée à pH 3 est stable à l'addition de CaCl₂ jusqu'à une concentration de 1 mol. 1⁻¹.

### Sulfate de magnésium MgSO₄

Les suspensions CE6j, CE3f et CE6l sont stables en présence de MgSO₄ jusqu'à une concentration de 1 mol. 1⁻¹. On observe une floculation irréversible pour des concentrations en MgSO₄ supérieures à 2 mol. 1⁻¹.

### ADSORPTION DE PROTEINES SUR LES LATEX MODIFIES

### Protocole :

1 g de suspension est dilué dans une solution aqueuse de protéine de concentration connue. La solution est laissée au repos pendant 14 heures. Le polymère est séparé par addition de sels (vide supra floculation des polymères modifiés) à température ambiante puis centrifugation. La protéine en excès dans le filtrat est dosée par la méthode colorimétrique au Bleu de Coomassie.

### Résultats : adsorption de l'albumine de sérum bovin BSA.

La quantité de BSA adsorbée est supérieure à 5 mg par g de suspension (c'est-à-dire supérieure à 70 mg de polymère "sec").

## Revendications

1. Particule de latex ou d'oxyde minéral, **caractérisée en ce qu'**au moins une chaîne, à l'extrémité de laquelle est attaché un reste glycosyle, est fixée à la surface de ladite particule, **en ce qu'**elle comporte en surface des radicaux fonctionnels amine, thiol ou phénol ou des sites silanols dans le cas des particules de silice, dont au moins une partie participe à la structure de ladite chaîne, cette dernière répondant à la formule : 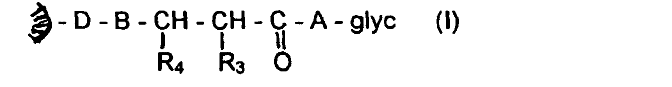
A est la partie restante de ladite chaîne,
B est choisi dans le groupe constitué par les radicaux N-R₁ ou un atome d'oxygène ou un atome de soufre,
D est un radical divalent -(CH₂)n- ou phénylène,
R₁ est un radical alkyle de C₁ à C₄ ou un atome d'hydrogène,
R₃, R₄ identiques ou différents représentent un radical alkyle inférieur en C₁ à C₆ ou un atome d'hydrogène,
n est un nombre entier de 0 à 10,
glyc est un reste glycosyle
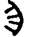 symbolise la surface de la sphère.

2. Particule selon la revendication 1, **caractérisée en ce que** lorsque la particule est une particule de silice, D est (CH₂)ₙ, avec n = 0 et B est l'atome d'oxygène ; lorsque la particule est une particule de latex à radicaux amine, D est (CH₂)ₙ, et n = 1 à 10, B est N-R₁ ; lorsque la particule est une particule de latex à radicaux phénol ou thiol, D est le radical phénylène, B est l'atome d'oxygène ou de soufre.

3. Particule selon la revendication 1 ou 2, **caractérisée en ce que** ladite chaîne répond à la formule : 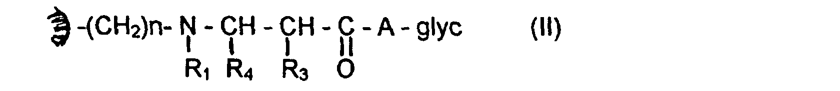 dans laquelle :
R₁ est un radical alkyle de C₁ à C₄ ou un atome d'hydrogène,
R₃, R₄ identiques ou différents représentent un radical alkyle inférieur en C₁ à C₆ ou un atome d'hydrogène,
A est la partie restante de ladite chaîne,
n est un nombre entier de 1 à 10,
glyc est un reste glycosyle
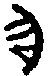 symbolise la surface de la sphère.

4. Particule selon l'une des revendications précédentes, **caractérisée en ce que** A est le radical 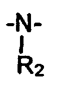 R₂ étant un atome d'hydrogène ou un radical alkyle de C₁ à C₁₄ ou aralkyle de C₇ à C₁₄, lesdits radicaux étant éventuellement substitués par un ou plusieurs radicaux carboxylate ou sulfonate terminaux ou pendants.

5. Particule selon l'une des revendications 1 à 4, **caractérisée en ce que** la proportion des chaînes glycosylées par rapport à la quantité de radicaux amine, thiol ou phénol, sites silanol présents à la surface de la microsphère est comprise entre 10 et 99 %.

6. Particule de latex glycosylée, selon l'une des revendications 1 à 5, constituée de polymères obtenus par polymérisation de monomères éthyléniquement insaturés dont 1 à 25 % en poids, présentent des radicaux fonctionnels aminé, thiol, phénol en surface, **caractérisée en ce qu'**une partie des radicaux fonctionnels est reliée à un reste glycosyle et **en ce que** ladite chaîne répond à la formule : 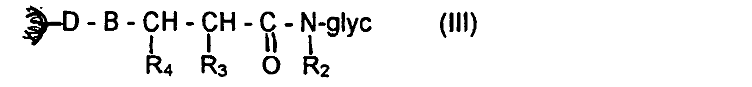 dans laquelle
D, B, R₁, R₂, R₃, R₄, glyc, ont la même signification que dans les revendications 1 à 4.

7. Particule d'oxyde minéral modifié en surface par des radicaux fonctionnels amine, thiol ou phénol ou des sites silanols dans le cas des particules de silice, selon l'une des revendications 1 à 5, **caractérisée en ce qu'**une partie des radicaux fonctionnels est reliée à un reste glycosyle et **en ce que** ladite chaîne répond à la formule : 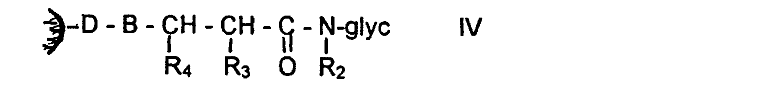 dans laquelle
B, D, R₁, R₂, R₃, R₄, n, glyc, ont la même signification que dans les revendications 1 à 4.

8. Particule selon l'une des revendications précédentes, **caractérisée en ce que** le reste glycosyle est choisi parmi les restes des sucres suivants : glucose, galactose, galactopyranose, glycofuranose, fructose, fructopyranose, saccharose, lactose.

9. Particule selon l'une des revendications précédentes, **caractérisée en ce qu'**elle comprend (par unité de surface) de 0,4 à 50 chaînes par nm² auxquelles est attaché un reste glycosyle.

10. Particule selon l'une des revendications précédentes, **caractérisée en ce que** la chaîne a une longueur moyenne allant de 0,5 à 12 nm (5 à 120 Angströms).

11. Particule selon l'une des revendications précédentes, **caractérisée en ce que** la chaîne comporte de 4 à 80 atomes de carbone, avantageusement 6 à 20 atomes de carbone.

12. Particules selon l'une des revendications précédentes, **caractérisées en ce qu'**elles possèdent une taille comprise entre 0,01 et 20 µm.

13. Procédé de préparation d'une particule selon l'une des revendications 1 à 12, **caractérisé en ce qu'**on greffe sur une microsphère de latex ou d'oxyde minéral fonctionnalisée en surface par des radicaux amine primaire ou secondaire, thiol ou phénol ou par des sites silanols dans le cas des particules d'oxyde de silice, un (méth)acrylamidoglycosyle éventuellement N-alkyle par une addition de type Michael.

14. Procédé de préparation d'une particule de latex selon la revendication 6, **caractérisé en ce qu'**on surpolymérise sur une semence de polystyrène, un monomère de (méth)acrylamidoglycosyle éventuellement N-alkyle en présence d'une quantité appropriée d'un monomère insaturé éthyléniquement de type (méth)acrylique.

15. Utilisation des particules selon l'une des revendications 1 à 12, en tant qu'agent de diagnostic ou de détection biologique.

16. Utilisation des particules selon l'une des revendications 1 à 12, en tant que phase stationnaire de chromatographie par affinité.

## Claims

1. Particle of latex or of inorganic oxide, **characterized in that** at least one chain, to the end of which a glycosyl residue is attached, is bound to the surface of the said particle, **in that** it comprises at the surface amine, thiol or phenol functional radicals or silanol sites in the case of silica particles, at least a proportion of which forms part of the structure of the said chain, the latter corresponding to the formula: 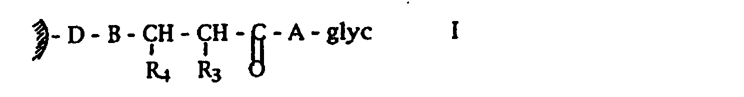
A is the remaining part of the said chain,
B is chosen from the group consisting of N-R₁ radicals or an oxygen atom or a sulphur atom,
D is a divalent -(CH₂)ₙ- or phenylene radical,
R₁ is a C₁-C₄ alkyl radical or a hydrogen atom,
R₃ and R₄, which are identical or different, denote a C₁-C₆ lower alkyl radical or a hydrogen atom,
n is an integer from 0 to 10,
glyc is a glycosyl residue
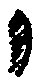 symbolizes the surface of the sphere.

2. Particle according to Claim 1, **characterized in that**, when the particle is a silica particle, D is (CH₂)ₙ, where n = 0, and B is the oxygen atom; when the particle is a latex particle containing amine radicals, D is (CH₂)ₙ and n = 1 to 10, B is N-R₁; when the particle is a latex particle containing phenol or thiol radicals, D is the phenylene radical, B is the oxygen or sulphur atom.

3. Particle according to Claim 1 or 2, **characterized in that** the said chain corresponds to the formula: 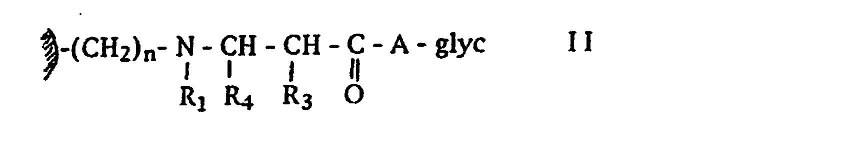 in which:
R₁ is a C₁-C₄ alkyl radical or a hydrogen atom,
R₃ and R₄, which are identical or different, denote a C₁-C₆ lower alkyl radical or a hydrogen atom,
A is the remaining part of the said chain,
n is an integer from 1 to 10,
glyc is a glycosyl residue
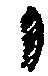 symbolizes the surface of the sphere.

4. Particle according to one of the preceding claims, **characterized in that** A is the radical 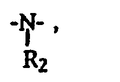 R₂ being a hydrogen atom or a C₁-C₁₄ alkyl or C₇-C₁₄ aralkyl radical, the said radicals being optionally substituted by one or more terminal or pendent carboxylate or sulphonate radicals.

5. Particle according to one of Claims 1 to 4, **characterized in that** the proportion of the glycosylated chains relative to the amount of amine, thiol or phenol radicals or silanol sites present at the surface of the microsphere is between 10 and 99%.

6. Glycosylated latex particle according to one of Claims 1 to 5, consisting of polymers obtained by polymerization of ethylenically unsaturated monomers, 1 to 25% by weight of which exhibit amine, thiol or phenol functional radicals at the surface, **characterized in that** a proportion of the functional radicals is joined to a glycosyl residue and **in that** the said chain corresponds to the formula: 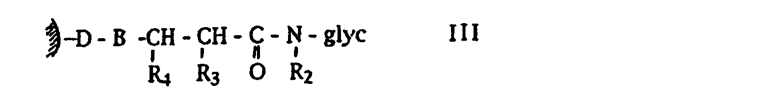 in which
D, B, R₁, R₂, R₃, R₄ and glyc have the same meaning as in Claims 1 to 4.

7. Inorganic oxide particle modified at the surface with amine, thiol or phenol functional radicals or silanol sites in the case of silica particles according to one of Claims 1 to 5, **characterized in that** a proportion of the functional radicals is joined to a glycosyl residue and **in that** the said chain corresponds to the formula: 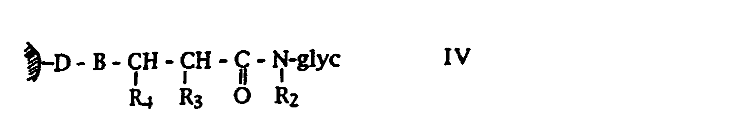 in which
B, D, R₁, R₂, R₃, R₄, n and glyc have the same meaning as in Claims 1 to 4.

8. Particle according to one of the preceding claims, **characterized in that** the glycosyl residue is chosen from the following sugar residues: glucose, galactose, galacto-pyranose, glycofuranose, fructose, fructopyranose, sucrose and lactose.

9. Particle according to one of the preceding claims, **characterized in that** it comprises (per unit of area) from 0.4 to 50 chains per nm² to which a glycosyl residue is attached.

10. Particle according to one of the preceding claims, **characterized in that** the chain has a mean length ranging from 0.5 to 12 nm (5 to 120 angstroms).

11. Particle according to one of the preceding claims, **characterized in that** the chain comprises from 4 to 80 carbon atoms, advantageously 6 to 20 carbon atoms.

12. Particles according to one of the preceding claims, **characterized in that** they have a size of between 0.01 and 20 µm.

13. Process for the preparation of a particle according to one of Claims 1 to 12, **characterized in that** an optionally N-alkyl (meth)acrylamidoglycosyl is grafted using an addition of the Michael type onto a microsphere of latex or of inorganic oxide functionalized at the surface with primary or secondary amine, thiol or phenol radicals or with silanol sites in the case of the particles of silica.

14. Process for the preparation of a latex particle according to Claim 6, **characterized in that** an optionally N-alkyl (meth)acrylamidoglycosyl monomer is overpolymerized on a polystyrene seed in the presence of an appropriate quantity of an ethylenically unsaturated monomer of (meth)acrylic type.

15. Use of the particles according to one of Claims 1 to 12 as diagnostic agent or agent for biological detection.

16. Use of the particles according to one of Claims 1 to 12 as stationary phase in affinity chromatography.

## Patentansprüche

1. Latex- oder Mineraloxid-Teilchen, **dadurch gekennzeichnet, dass** mindestens eine Kette, an deren Ende ein Glycosylrest angebracht ist, auf der Oberfläche des Teilchens fixiert ist, dass es auf der Oberfläche funktionelle Amin-, Thioloder Phenolreste oder im Fall von Siliciumdioxid-Teilchen Silanolstellen umfasst, von denen mindestens ein Teil an der Struktur der Kette teilnimmt, wobei die letztgenannte der Formel: 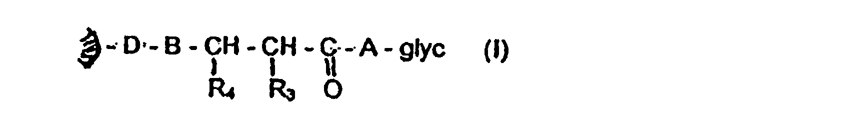 entspricht,
A ist der verbleibende Teil der Kette,
B ist ausgewählt aus der Gruppe bestehend aus den Resten N-R₁ oder einem Sauerstoffatom oder einem Schwefelatom,
D ist ein zweiwertiger Rest -(CH₂)ₙ- oder Phenylen,
R₁ ist ein C₁- bis C₄-Alkylrest oder ein Wasserstoffatom,
R₃, R₄, identisch oder verschieden, stellen einen C₁- bis C₆-Niederalkylrest oder ein Wasserstoffatom dar,
n ist eine ganze Zahl von 0 bis 10,
glyc ist ein Glycosylrest
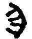 symbolisiert die Oberfläche der Kugel.

2. Teilchen nach Anspruch 1, **dadurch gekennzeichnet, dass**, wenn das Teilchen ein Siliciumdioxid-Teilchen ist, D für (CH₂)ₙ steht, mit n = 0, und B ein Sauerstoffatom ist; wenn das Teilchen ein Latex-Teilchen mit Aminresten ist, D für (CH₂)ₙ steht und n = 1 bis 10, B für N-R₁ steht; wenn das Teilchen ein Latex-Teilchen mit Phenol- oder Thiolresten ist, D ein Phenylenrest ist, B ein Sauerstoff- oder Schwefelatom ist.

3. Teilchen nach Anspruch 1 oder 2, **dadurch gekennzeichnet, dass** die Kette der Formel: 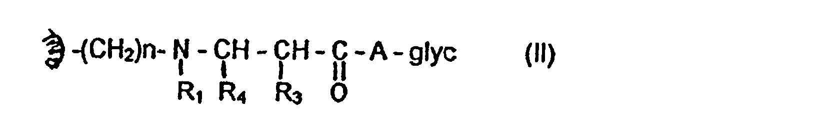 entspricht, in der:
R₁ ein C₁- bis C₄-Alkylrest oder ein Wasserstoffatom ist,
R₃, R₄, identisch oder verschieden, einen C₁- bis C₆-Niederalkylrest oder ein Wasserstoffatom darstellen,
A der verbleibende Teil der Kette ist,
n eine ganze Zahl von 1 bis 10 ist,
glyc ein Glycosylrest ist,
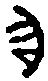 die Oberfläche der Kugel symbolisiert.

4. Teilchen nach einem der vorangehenden Ansprüche, **dadurch gekennzeichnet, dass** A der Rest 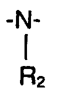 ist,
worin R₂ ein Wasserstoffatom oder ein C₁- bis C₁₄-Alkylrest oder ein C₇- bis C₁₄-Aralkylrest ist, wobei die Reste gegebenenfalls durch einen oder mehrere endständige oder seitenständige Carboxylat- oder Sulfonatreste substituiert sind.

5. Teilchen nach einem der Ansprüche 1 bis 4, **dadurch gekennzeichnet, dass** der Anteil an glycosylierten Ketten bezüglich der Menge an Amin-, Thiol- oder Phenolresten, Silanolstellen, die auf der Oberfläche der Mikrokugel vorliegen, 10 bis 99% beträgt.

6. Glycosyliertes Latex-Teilchen nach einem der Ansprüche 1 bis 5, aufgebaut aus Polymeren, die durch Polymerisation von ethylenisch ungesättigten Monomeren erhalten werden, von denen 1 bis 25 Gewichts-% funktionelle Amin-, Thiol-, Phenolreste an der Oberfläche mit sich bringen, **dadurch gekennzeichnet, dass** ein Teil der funktionellen Reste mit einem Glycosylrest verbunden ist und dass die Kette der Formel: 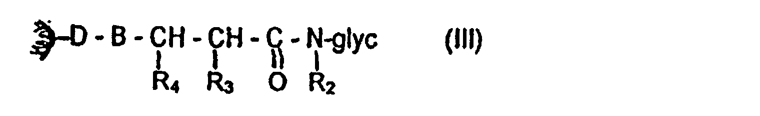 entspricht, in der
D, B, R₁, R₂, R₃, R₄, glyc die gleiche Bedeutung wie in den Ansprüchen 1 bis 4 aufweisen.

7. Mineraloxid-Teilchen, das an der Oberfläche durch funktionelle Amin-, Thioloder Phenolreste oder im Fall von Siliciumdioxid-Teilchen Silanolstellen modifiziert ist, gemäß einem der Ansprüche 1 bis 5, **dadurch gekennzeichnet, dass** ein Teil der funktionellen Reste an einen Glycosylrest gebunden ist und dass die Kette der Formel: 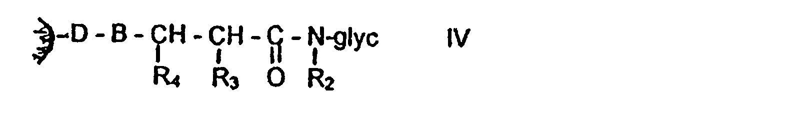 entspricht, in der
B, D, R₁, R₂, R₃, R₄, n, glyc die gleiche Bedeutung wie in den Ansprüchen 1 bis 4 aufweisen.

8. Teilchen nach einem der vorangehenden Ansprüche, **dadurch gekennzeichnet, dass** der Glycosylrest ausgewählt ist aus den folgenden Zuckerresten: Glucose, Galactose, Galactopyranose, Glycofuranose, Fructose, Fructopyranose, Saccharose, Lactose.

9. Teilchen nach einem der vorangehenden Ansprüche, **dadurch gekennzeichnet, dass** es (pro Oberflächeneinheit) 0,4 bis 50 Ketten pro nm² umfasst, an denen ein Glycosylrest angebracht ist.

10. Teilchen nach einem der vorangehenden Ansprüche, **dadurch gekennzeichnet, dass** die Kette eine mittlere Länge von 0,5 bis 12 nm (5 bis 120 Angström) aufweist.

11. Teilchen nach einem der vorangehenden Ansprüche, **dadurch gekennzeichnet, dass** die Kette 4 bis 80 Kohlenstoffatome, vorteilhaft 6 bis 20 Kohlenstoffatome, umfasst.

12. Teilchen nach einem der vorangehenden Ansprüche, **dadurch gekennzeichnet, dass** es eine Größe zwischen 0,01 und 20 µm besitzt.

13. Verfahren zur Herstellung eines Teilchens gemäß einem der Ansprüche 1 bis 12, **dadurch gekennzeichnet, dass** man auf ein Latex- oder Mineraloxid-Mikrokügelchen, das an seiner Oberfläche durch primäre oder sekundäre Amin-, Thiol- oder Phenolreste oder durch Silanolstellen im Fall von Teilchen aus Siliciumdioxid funktionalisiert ist, ein (Meth)acrylamidoglycosyl, gegebenenfalls N-alkyliert, durch eine Michael-Addition pfropft.

14. Verfahren zur Herstellung eines Latex-Teilchens gemäß Anspruch 6, **dadurch gekennzeichnet, dass** man auf einen Polystyrol-Keim ein (Meth)acrylamidoglycosyl-Monomer, gegebenenfalls N-alkyliert, in Anwesenheit einer geeigneten Menge eines ethylenisch ungesättigten Monomers der (meth)acrylischen Art aufpolymerisiert.

15. Verwendung der Teilchen nach einem der Ansprüche 1 bis 12 als Mittel zur Diagnose oder zum biologischen Nachweis.

16. Verwendung der Teilchen nach einem der Ansprüche 1 bis 12 als stationäre Phase bei der Affinitätschromatographie.
